# EUROPÄISCHE PATENTSCHRIFT

(11) **EP 1 647 869 B1**
(45) Veröffentlichungstag und Bekanntmachung des Hinweises auf die Patenterteilung: **08.10.2008**
(21) Anmeldenummer: 05107286.6
(22) Anmeldetag: 08.08.2005
(51) Int. Cl.: G05B 19/042

(54) **Übertragung von Daten in und aus Automatisierungskomponenten**
Data transmission to and from automation components
Transmission de données vers et à partir de composants d'automatisation

(30) Priorität: 15.10.2004 DE 102004050383
(43) Veröffentlichungstag der Anmeldung: 19.04.2006
(73) Patentinhaber: SIEMENS AKTIENGESELLSCHAFT, 80333 München (DE)
(72) Erfinder: Friedrich, Wolfgang, 91088 Bubenreuth (DE); Opgenoorth, Bernd, 90403 Nürnberg (DE); Scharnagl, Joachim, 90402 Nürnberg (DE)

(56) Entgegenhaltungen:
- EP-A- 0 600 374
- WO-A-03/017015
- WO-A-20/05015330
- US-A1- 2003 050 093
- US-A1- 2004 176 143

## Beschreibung

Die Anmeldung betrifft ein Automatisierungssystem mit mindestens einer Automatisierungskomponente, in die und aus der Daten mittels einer RFID-Schreib- und/oder Leseeinheit übertragen werden.

Im Rahmen eines Automatisierungssystems werden in der Regel Daten in und aus verschiedensten Automatisierungskomponenten übertragen. Bei den Automatisierungskomponenten kann es sich beispielsweise um speicherprogrammierbare Steuerungen, numerische Steuerungen, Feldbuskomponenten der dezentralen Peripherie oder auch Feldgeräte handeln. Die Daten, beispielsweise Identifikationsinformationen, welche fest auf der jeweiligen Automatisierungskomponente gespeichert sind oder auch Parametrierungsdaten sowie Betriebsdaten werden in der Regel über eine direkte, elektrische Verbindung, beispielsweise Profibus oder Ethernet übertragen. Eine drahtlose Übertragung von Daten ist auch über W-LAN möglich.

In all diesen Fällen muss jedoch ein Netzwerk mit entsprechender Hardware für diese Datenübertragung vorhanden sein. Im Fall einer Datenübertragung über ein Bus-System bzw. ein Ethernet muss eine Verkabelung des gesamten Automatisierungssystems bzw. der zu automatisierenden Anlagen gewährleistet sein. Im Fall der drahtlosen Datenübertragung über ein W-LAN müssen die entsprechenden Sende- und Empfangseinheiten installiert sein. Darüber hinaus wird ein so genanntes Engineeringsystem z.B. zum Einrichten und Parametrieren dieser sonst üblichen Datenübertragung benötigt.

Aus der WO 03/017015 A1 ist eine Kennzeichnung von Baugruppen/Baueinheiten bekannt. Dabei wird eine Identifikation oder eine Zugangsberechtigung in eine Einzelkomponente gespeichert und bei Herstellung der Baugruppe erfassten Daten in einem Datenspeicher gespeichert bzw. wiederbeschrieben, wobei jedoch ein extra Engineering-System oder eine weitere Infrastruktur benötigt wird. Das Wiederbeschreiben oder das Speichern von Daten ist zwecks der Produktion oder Montage von Baugruppen, weil solche Daten zur eindeutigen Identifizierung der Einzelteile der Baugruppe erfasst und gespeichert sind, und als Sollwerte für Auswertung der Baugruppe vorgesehen werden.

Die Bereitstellung einer derartigen Infrastruktur für die Datenübertragung zwischen den einzelnen Automatisierungskomponenten ist aufwendig und verursacht erhebliche Kosten.

In der Regel wird für die Ermittlung dieser Daten, beispielsweise Identifikationsinformationen oder auch Parametrierungsdaten sowie Betriebsdaten ein zur Version der jeweiligen Automatisierungskomponente passendes Engineeringsystem benötigt.

Aufgabe der vorliegenden Erfindungen ist es, eine einfache Übertragung von Daten in und aus Automatisierungskomponenten zu ermöglichen, bei der keine zusätzlichen Netzwerkkomponenten (Hardware und Software) oder Engineeringsystem benötigt werden.

Die Erfindung wird gelöst durch ein Automatisierungssystem aufweisend mindestens eine Automatisierungskomponente, insbesondere speicherprogrammierbare Steuerung, numerische Steuerung, Feldbuskomponente und/oder Feldgerät, mit einem RFID-Tag zur Speicherung von Daten und einer ersten RFID-Schreib- und/oder Leseeinheit zum Eintragen und/oder Auslesen von Daten der Automatisierungskomponente, insbesondere Parametrier-Daten, Betriebsdaten und/oder Prozessdaten in den und/oder aus dem RFID-Tag und mindestens eine mobile/externe RFID-Schreib- und/oder Leseeinheit zum Eintragen und/oder Auslesen von Daten in den und/oder aus dem RFID-Tag.

Der Erfindung liegt die Erkenntnis zugrunde, dass im Rahmen eines Automatisierungssystems heutzutage vermehrt intelligente Automatisierungskomponenten, welche Daten erzeugen und Daten aus dem Automatisierungssystem erhalten, verwendet werden. Für die Datenübertragung wird in der Regel ein aufwendiges Bussystem oder ein Ethernet oder auch eine drahtlose Verbindung, wie beispielsweise ein W-LAN gewählt. In diesen Fällen ist eine aufwendige Installation des entsprechenden Kommunikationssystems notwendig. Bei der Verwendung von RFID-Tags bzw. RFID-Chips, also Funketiketten, welche Daten speichern können, kann die aufwendige Installation des Kommunikationsnetzwerkes unterbleiben. Die Daten, beispielsweise Identifikationsinformationen oder aktuelle Betriebs- bzw. Prozessdaten können von den jeweiligen Automatisierungskomponenten, beispielsweise einer Steuerung oder auch einem Feldgerät über eine in das Automatisierungsgerät integrierte RFID-Schreib- oder Leseeinheit auf ein ebenfalls in die Automatisierungskomponente integriertes bzw. fest damit verbundenes RFID-Tag geschrieben werden. Auf dem in die Automatisierungskomponente integrierten bzw. fest damit verbundenen RFID-Tag können zusätzlich werksseitig fest eingetragene Identifikationsinformationen gespeichert werden. Die direkt von der Automatisierungskomponente oder auch anderen Automatisierungskomponenten in den RFID-Tag eingetragenen und gespeicherten Daten können anschließend über eine mobile/externe weitere RFID-Schreib- und Leseeinheit ausgelesen werden.

Der Vorteil hierbei ist, dass im Gegensatz zu anderen Kommunikationsformen keine weitere Infrastruktur benötigt wird. Lediglich eine tragbare RFID-Schreib- und Leseeinheit, welche in der Lage ist, aus dem Automatisierungsgerät bzw. aus dem RFID-Tag die gespeicherte Information auszulesen, wird benötigt. So können die Daten auf einfache und kostengünstige Weise aus den Automatisierungskomponenten ausgelesen werden. Hierbei kann in weniger leistungsfähige Automatisierungskomponenten, welche selber keine eigenen Daten produzieren, die gespeichert werden müssen, lediglich ein RFID-Tag, also eine Speichereinheit, integriert bzw. fest verbunden aufgebracht werden. Auf dieser Speichereinheit wären dann lediglich Identifikationsinformationen, welche werksseitig eingebracht würden, enthalten.

Ein Vorteil bei der Verwendung von RFID-Funksensoren zur Kommunikation liegt darin, dass mittels mobiler Lese- und Schreibeinrichtungen an jeder Stelle des Automatisierungssystems ohne Verwendung eines passenden Engineering-Systems und ohne Kommunikationseinrichtung Daten übertragen werden können. Dies ist insbesondere von Vorteil bei einer sehr weit verteilten Automatisierungsstruktur oder auch bei Automatisierungssystemen, bei denen einzelne Komponenten häufig umkonfiguriert werden bezüglich ihrer räumlichen Position, so dass die Installation eines Kommunikationsnetzwerkes aufwendig und teuer wäre.

Weitere vorteilhafte Ausführungen der Erfindung sind in den Unteransprüchen dargestellt.

Insbesondere ist es möglich mit einer mobilen RFID-Schreib- und Leseeinheit auch bei weiteren Automatisierungskomponenten, die im Rahmen des Automatisierungssystems vorgesehen sind, jeweils die entsprechenden Daten auszulesen und so für eine gegenseitige Datenübertragung zwischen den einzelnen Komponenten des Automatisierungssystems zu nutzen. Mittels der RFID-Schreib- und Leseeinheit erfolgt quasi ein Datenaustausch zwischen den einzelnen Automatisierungskomponenten.

Bei Inbetriebsetzung bzw. bei Instandhaltung oder Wartung können vorteilhafter Weise Informationen oder Daten ohne direkte, drahtgebundene Verbindung und ohne die Verwendung eines Engineeringwerkzeugs mittels einer RFID-Schreib- und Leseeinheit von Automatisierungskomponenten gelesen bzw. dort eingebracht werden. Beispielsweise können bei einer Inbetriebsetzung ohne Anschluss eines Engineeringsystems bestimmte Parameter verändert oder angepasst werden oder für eine Inbetriebsetzung wichtige Daten z. B. eine Seriennummer oder der Typ der verwendeten Hardware bzw. die Version der vorhandenen Firmenware oder die Version der Anwendersoftware ausgelesen werden. Bei Wartungsarbeiten können beispielsweise ohne angeschlossenes Engineeringwerkzeug wichtige Informationen wie z. B. Firmenware-Version, Hardwaretyp usw. ausgelesen werden. Dies vereinfacht den Ersatzteilaustausch ganz wesentlich und sorgt dafür, dass bestimmte Fehler schon von vorneherein gar nicht auftreten können.

Die aus den Automatisierungskomponenten ausgelesenen Informationen helfen somit beim Auf- bzw. Umrüsten. So lassen sich ohne Engineeringwerkzeug wichtige Informationen der umzurüstenden Komponente erfragen, wie auch wichtige Informationen der Nachbarkomponente in Erfahrung bringen. Wartungsdaten (z. B. Datum bzw. Umfang der Wartung oder wer die Wartung durchgeführt hat) können so auf die entsprechende Automatisierungskomponente übertragen werden. Die Daten können später sowohl wieder über ein externes RFID-Schreib- und Lesegerät ausgelesen werden wie auch durch die Steuerung bzw. Automatisierungskomponente über das integrierte RFID-Schreib- und Leseeinheit ausgelesen und von dieser dann an ein übergelagertes MES-System weitergegeben werden. Auch die über die RFID-Schreib- und Leseeinheit ausgelesenen Daten lassen sich anschließend in ein anderes System z. B. ein MES-System oder ein ERP-System eintragen bzw. einpflegen. Hierdurch wird ein Vergessen bzw. ein Fehler, der beispielsweise beim Doppelteintragen von Daten auftreten kann, verhindert. Insgesamt kann mit Hilfe des erfindungsgemäßen Systems eine einfache und sichere Datenübertragung im Umfeld von Automatisierungssystemen gewährleistet werden.

Eine weitere vorteilhafte Anwendung der Erfindung ist beispielsweise im Rahmen eines Augmented Reality Systems möglich. Hierbei hat beispielsweise ein Head Mounted Display oder eine tragbare Computereinheit, welche jeweils für einen Anwender augmentierte Daten zu Darstellung bringen eine integrierte RFID-Schreib- und Leseeinheit. Über die in das Head Mounted Display integrierte RFID-Schreib- und Leseeinheit können Daten an eine Automatisierungskomponente über deren RFID-Tag übertragen werden bzw. auch Daten von einer Automatisierungskomponente empfangen werden. Die über die RFID Schreib- und Leseeinheit empfangenen Daten können dem Anwender anschließend in seiner augmentierten Realität angezeigt werden. Somit können im Rahmen eines Augmented Reality Systems die zu augmentierenden Daten auf einfache Weise ohne Verwendung einer Standardkommunikationseinrichtung wie beispielsweise eines Bus-Systems oder eines Ethernets zur Darstellung gebracht werden.

Im Folgenden ist die Erfindung anhand der in den Figuren dargestellten Ausführungsbeispiele näher beschrieben und erläutert. Es zeigen:
- FIG 1: eine Automatisierungskomponente mit RFID-Tag und integrierter RFID-Schreib- und Leseeinheit und mobiler/ externer RFID-Schreib- und Leseeinheit,
- FIG 2: eine Automatisierungskomponente mit RFID-Tag und integrierter RFID-Schreib- und Leseeinheit und zusätzlich mehrere Automatisierungskomponenten mit RFID-Tags und eine mobile/externe RFID-Schreib- und Leseeinheit,
- FIG 3: eine entsprechende Automatisierungskomponente in unwirtlicher Umgebung.
- FIG 4: Automatisierungskomponente mit RFID-Tag und Datenübertragung an Augmented Realtiy System mit RFID-Technik.

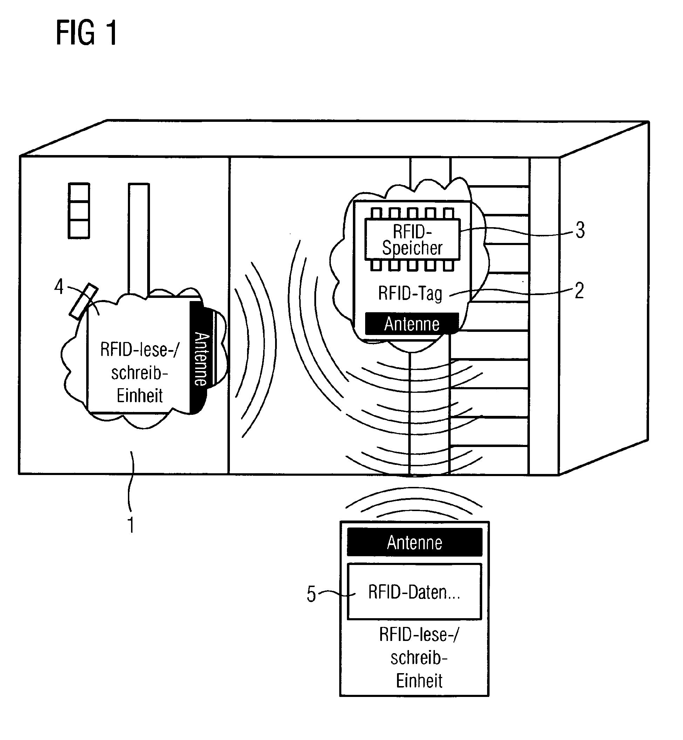

FIG 1 stellt eine Automatisierungskomponente 1 eines Automatisierungssystems dar. Bei der Automatisierungskomponente 1 kann es sich um eine speicherprogrammierbare Steuerung, eine numerische Steuerung, ein Gerät der dezentralen Peripherie oder auch ein Feldgerät handeln. Die Automatisierungskomponente 1 verfügt über einen RFID-Tag 2. Der RFID-Tag 2 ist fest mit der Automatisierungskomponente 1 verbunden. Zusätzlich verfügt die Automatisierungskomponente 1 über eine RFID-Schreib- und Leseeinheit 4. Die RFID-Schreib- und Leseeinheit 4 ist fest in die Automatisierungskomponente 1 integriert. Der RFID-Tag 2 verfügt über ein RFID-Memory 3. In das RFID-Memory 3 kann beispielsweise werksseitig fest eingetragene Identifikationsinformationen gespeichert werden. Über die RFID-Schreib- und Leseeinheit 4 kann die Automatisierungskomponente 1 weitere Daten z. B. Parametrier-Daten, aktuelle Betriebs- und Prozessdaten usw. in den integrierten RFID-Tag 2 eintragen. Über die RFID-Schreib- und Leseeinheit 4 kann weiterhin Zusatzinformation oder auch Parameterdaten von dem RFID-Tag 2 aus dem Speicher (RFID-Memory 3) des RFID-Tags 2 ausgelesen werden.

Im Rahmen des Automatisierungssystems wird weiterhin eine mobile, externe RFID-Schreib- und Leseeinheit 5 zum Eintragen bzw. Auslesen von Daten verwendet. Über die mobile RFID-Lese- und Schreibeinheit 5 können über den RFID-Memory 3 quasi Daten aus dem Automatisierungsgerät bzw. der Komponente 1 ausgelesen werden. Hierbei können fest eingetragene Daten sowie auch von der CPU der Automatisierungskomponente 1 in den RFID-Tag 2 eingetragene Daten ausgelesen werden. Ebenso können über die mobile RFID-Lese- und Schreibeinheit 5 Daten in den RFID-Tag 2 eingetragen werden. Diese dort eingetragenen Daten können anschließend von der CPU der Automatisierungskomponente 1 ausgewertet werden. Durch die Verwendung der RFID-Technologie ist die Datenübertragung ohne eine elektrische Verbindung (Profibus, Ethernet, etc.) zwischen den Automatisierungskomponenten 1 und externem Schreib- Lesegerät 5 möglich. Eine Verwendung eines Engineeringwerkzeuges wie sonst nötig kann in diesem Fall unterbleiben.

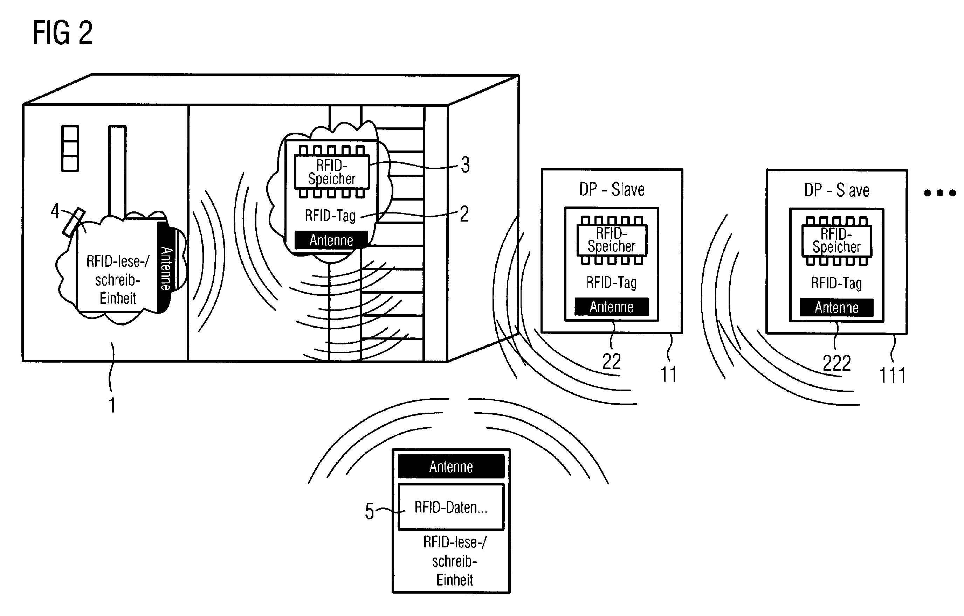

FIG 2 zeigt ein weiteres Ausführungsbeispiel, bei dem weitere Automatisierungskomponenten 11, 111, mit jeweils einem RFID-Tag 22, 222. Die RFID-Tags sind beispielsweise in die Automatisierungskomponenten 11, 111 fest integriert bzw. fest außen aufgebracht. Sind die weiteren Automatisierungskomponenten 11, 111 in Reichweite der RFID-Schreib- und Leseeinheit 4, kann die Automatisierungskomponente 1, welche über eine integrierte RFID-Schreib- und Leseeinheit verfügt auch zu den weiteren Geräten 11, 101 ohne direkte Verbindung Daten übertragen bzw. Daten von dort lesen. Die Übertragung erfolgt in diesem Fall über die mobile RFID-Lese- und Schreibeinheit 5 oder die Datenübertragung kann wenn die weiteren Automatisierungskomponenten 11, 111 in entsprechender Reichweite sind auch direkt zwischen der Automatisierungskomponente 1 und den weiteren Automatisierungskomponenten 11, 101 erfolgen, indem die integrierte RFID-Schreib- und Leseeinheit 4 Daten direkt auf die weiteren Automatisierungskomponenten 11, 101 bzw. in die RFID-Tags 22, 222 der Automatisierungskomponenten schreibt.

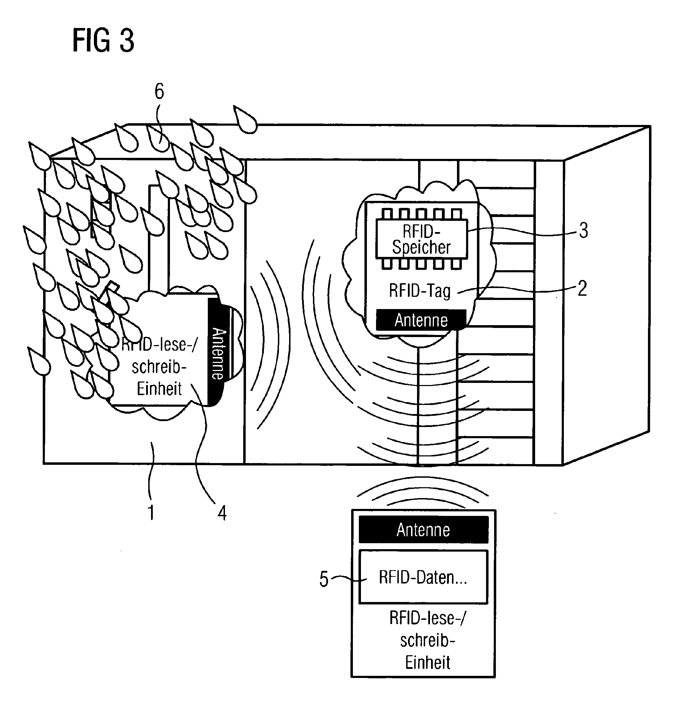

FIG 3 zeigt eine Automatisierungskomponente 1 beim Betrieb in unwirtlicher Umgebung 6. In derartiger Umgebung muss beispielsweise ein Gehäuseschutz IP 67 (staub- und kurzzeitig Wasserdicht) bzw. IP 68 (staubdicht und tauchfähig) ausgebildet sein. Bei einem derartigen Gehäuseschutz kann ein Datenaustausch unabhängig vom normalen Betrieb (z. B. für Diagnose, Wartung) mittels RFID-Tehnik ohne zusätzliche kabelgebundene Verbindung, welche ebenfalls IP 67 / 68 sein müsste, erfolgen. Durch die Ausstattung der Automatisierungskomponente 1 mit einer RFID-Schreib- und Leseeinheit 4 bzw. einem RFID-Tag 2 ist eine Datenübertragung an die mobile RFID-Schreib- und Leseeinheit 5 ohne eine Verkabelung möglich. Eine Datenübertragung ohne erheblichen Aufwand wird hierdurch gewährleistet und eine Kostenreduzierung beim Datenaustausch bei Outdoor-Anwendungen ermöglicht.

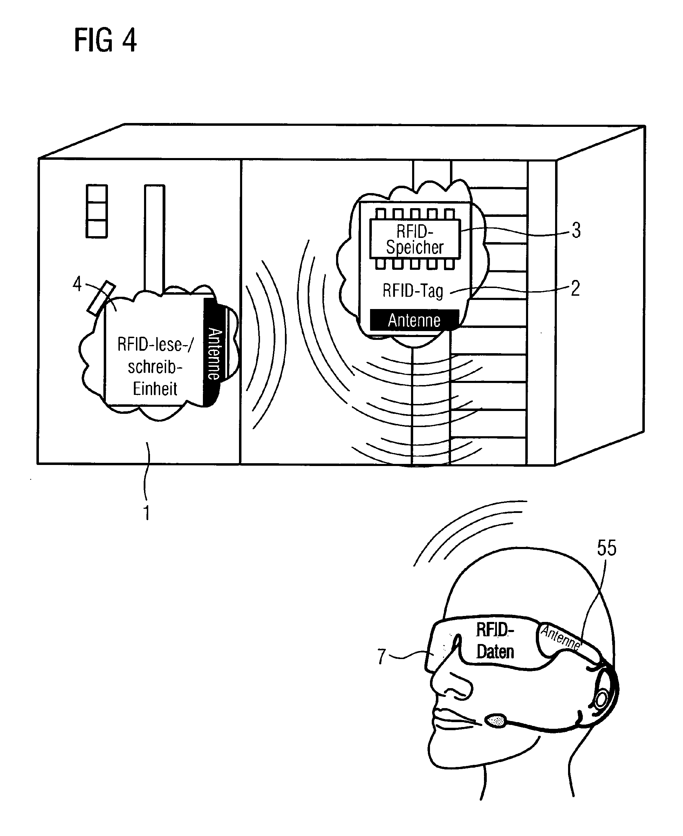

FIG 4 zeigt eine Anwendung, bei der die mobile RFID-Schreib und Leseeinheit 5 in ein Augmented Reality System bzw. in ein Head Mounted Display 7 integriert ist. Hierbei können Daten aus der Automatisierungskomponente 1 über die RFID-Lese- und Schreibeinheit 4 in den RFID-Tag 2 bzw. dessen Speicher 3 eingetragen werden. Die eingetragenen Daten können über die mobile, in das Head Mounted Display 7 integrierte RFID-Lese- und Schreibeinheit 55 an einen Anwender direkt übertragen werden. Die übertragenen Daten können anschließend auf dem Head Mounted Display im Rahmen eines Augmented Reality Systems dargestellt werden. Die RFID-Daten aus der Automatisierungskomponente 1 können somit ohne weiteres Netzwerk in das Sichtfeld des Anwenders integriert bzw. augmentiert werden. Die im RFID-Tag 2 gespeicherten Informationen können somit direkt für das Augmented Reality System verwendet werden. Zudem können so Daten, die bei einem bestimmten Arbeitsschritt in der Augmented Realtiy Arbeitsabfolge in der Automatisierungskomponente benötigt werden, z. B. Parameterdaten o. ä. automatisch vom Augmented Realtiy Werkzeug bzw. vom Head Mounted Display an die Automatisierungskomponente 1 übertragen werden. Hierdurch muss der Anwender zum einen keine Daten per Hand übertragen bzw. eingeben und zum anderen ist auch die Fehlerquelle fehlerhafter manueller Eingaben eliminiert. Daten, die auf umgewandelten bzw. interpretierten Spracheingaben des Augmented Reality Anwenders über das Mikrophon 8 eingegeben wurden bzw. resultieren, können ebenfalls mittels der RFID-Technik in den Speicher 3 der Automatisierungskomponente 1 übertragen werden.

## Patentansprüche

1. Automatisierungssystem aufweisend
• mindestens eine Automatisierungskomponente (1) mit
i. einem RFID-Tag (2) zur Speicherung von Daten und
ii. einer ersten RFID-Schreib- und Leseeinheit (4) zum Eintragen von aktuellen Betriebs- und/oder Prozessdaten der Automatisierungskomponente (1) in den RFID-Tag (2) und/oder zum Auslesen von Daten aus dem RFID-Tag (2),
• und mindestens einer mobilen RFID-Schreib- und Leseeinheit (5) zum Eintragen und/oder Auslesen von Daten in den und/oder aus dem RFID-Tag (2), wobei die im RFID-Tag (2) gespeicherten Daten durch das Eintragen mittels der ersten RFID-Schreib- und Leseeinheit (4) und/oder der mindestens einen mobilen RFID-Schreib- und Leseeinheit (5) aktualisierbar sind.

2. Automatisierungssystem nach Anspruch 1, wobei die erste RFID-Schreib- und Leseeinheit (4) in mindestens eine Automatisierungskomponente (1) integriert ist und/oder der RFID-Tag in die Automatisierungskomponente integriert oder fest von außen angebracht an der Automatisierungskomponente (1) ist.

3. Automatisierungssystem nach Anspruch 1 oder 2, wobei der RFID-Tag (2) zur Speicherung fest eingetragener Daten und/oder zur Speicherung von aktuellen Betriebs- und Prozessdaten der Automatisierungskomponente (1) vorgesehen ist.

4. Automatisierungssystem nach Anspruch 3, wobei die mindestens eine mobile RFID-Schreib- und Leseeinheit (5) zum Lesen der fest eingetragenen Daten und/oder der Daten der Automatisierungskomponente (1) aus dem RFID-Tag (2) vorgesehen ist.

5. Automatisierungssystem nach einem der Ansprüche 1 bis 4, bei dem weitere Automatisierungskomponenten (11,111) vorgesehen sind, wobei die weiteren Automatisierungskomponenten einen RFID-Tag (22,222) aufweisen.

6. Automatisierungssystem nach Anspruch 5, wobei die erste RFID-Schreib- und Leseeinheit (4) und/oder die mobile RFID-Schreib- und Leseeinheit (5) zum Eintragen und/oder Austragen von Daten in die und/oder aus den weiteren Automatisierungskomponenten (11, 111) vorgesehen sind.

7. Automatisierungssystem nach einem der Ansprüche 1 bis 6, bei dem ein Head Mounted Display (7) und/oder eine tragbare Computereinheit eines Augmented Reality Systems mit einer integrierten RFID-Schreib- und Leseeinheit (55) vorgesehen ist, wobei die von einer Automatisierungskomponente (1) über die integrierte RFID-Schreib- und Leseeinheit (55) empfangenen Daten zur Darstellung in der augmentierten Realität eines Anwenders vorgesehen sind.

8. Verfahren zum Übertragen von Daten, an und/oder aus Automatisierungskomponenten, bei dem
• die Daten auf der mindestens einen Automatisierungskomponente (1) mittels eines RFID-Tags (2) gespeichert werden,
• aktuelle Betriebs- und/oder Prozessdaten der mindestens einen Automatisierungskomponente (1) mittels einer ersten RFID-Schreib- und Leseeinheit (4) in den RFID-Tag (2) eingetragen und/oder Daten aus dem RFID-Tag (2) mittels der ersten RFID-Schreib und Leseeinheit (4) ausgelesen werden,
• und Daten mittels einer mobilen RFID-Schreib- und Leseeinheit (5) in den und/oder aus dem RFID-Tag (2) eingetragen und/oder ausgetragen werden, wobei die im RFID-Tag (2) gespeicherten Daten durch das Eintragen mittels der ersten RFID-Schreib- und Leseeinheit (4) und/oder der mindestens einen mobilen RFID-Schreib- und Leseeinheit (5) aktualisiert werden.

9. Verfahren nach Anspruch 8, bei dem der RFID-Tag (2) und/oder die erste RFID-Schreib- und Leseeinheit (4) in die mindestens eine Automatisierungskomponente (1) integriert ist.

10. Verfahren nach Anspruch 8 oder 9, bei dem der RFID-Tag (2) fest eingetragene Daten und/oder aktuellen Betriebs- und/oder Prozessdaten der Automatisierungskomponente (1) speichert.

11. Verfahren nach Anspruch 10, bei dem die mindestens eine mobile RFID-Schreib- und Leseeinheit (5) fest eingetragene Daten und/oder Daten der Automatisierungskomponente (1) aus dem RFID-Tag (2) liest und/oder Daten in den RFID-Tag (2) einträgt.

12. Verfahren nach einem der Ansprüche 8 bis 11, bei dem die erste RFID-Schreib- und Leseeinheit (4) und/oder die mobile RFID-Schreib- und Leseeinheit (5) Daten in und/oder aus weiteren Automatisierungskomponenten (1) ein- und/oder austrägt, wobei die weiteren Automatisierungskomponenten (1) einen RFID-Tag (2) aufweisen.

13. Verfahren nach einem der Ansprüche 8 bis 12, bei dem eine RFID-Schreib- und Leseeinheit (55) in ein Head Mounted Display (7) und/oder eine tragbare Computereinheit eines Augmented-Reality Systems integriert ist, wobei die von einer Automatisierungskomponente (1) über die integrierte RFID-Schreib- und Leseeinheit (55) empfangenen Daten in der augmentierten Realität eines Anwenders dargestellt werden.

14. Automatisierungskomponente mit
i. einem RFID-Tag (2) zur Speicherung von Daten und
ii. einer ersten RFID-Schreib- und Leseeinheit (4) zum Eintragen von aktuellen Betriebs- und/oder Prozessdaten der Automatisierungskomponente (1) in den RFID-Tag (2) und/oder zum Auslesen von Daten aus dem RFID-Tag (2),
• wobei die Automatisierungskomponente (1) zur Datenübertragung mit mindestens einer mobilen RFID-Schreib- und Leseeinheit (5) vorgesehen ist, wobei in und/oder aus dem RFID-Tag (2) der Automatisierungskomponente Daten mittels der mobilen RFID-Schreib- und Leseeinheit (5) auslesbar und eintragbar sind, und wobei die im RFID-Tag (2) gespeicherten Daten durch das Eintragen mittels der ersten RFID-Schreib- und Leseeinheit (4) und/oder der mindestens einen mobilen RFID-Schreib- und Leseeinheit (5) aktualisierbar sind.

15. Automatisierungskomponente nach Anspruch 14, wobei die erste RFID-Schreib- und Leseeinheit (4) in die Automatisierungskomponente (1) integriert ist und/oder der RFID-Tag in die Automatisierungskomponente (1) integriert ist oder fest von außen an der Automatisierungskomponente (1) angebracht ist.

16. Automatisierungskomponente nach Anspruch 14 oder 15, wobei der RFID-Tag (2) zur Speicherung fest eingetragener Daten und/oder zur Speicherung von aktuellen Betriebs- und/oder Prozessdaten der Automatisierungskomponente (1) vorgesehen ist.

17. Automatisierungskomponente nach Anspruch 16, wobei die mindestens eine mobile RFID-Schreib- und Leseeinheit (5) zum Lesen der fest eingetragenen Daten und/oder der Daten der Automatisierungskomponente (1) aus dem RFID-Tag (2) vorgesehen ist.

18. Automatisierungskomponente nach einem der Ansprüche 14 bis 17, die zur Kommunikation mit weiteren Automatisierungskomponenten (11, 111) vorgesehen ist, wobei die erste RFID-Schreib- und Leseeinheit (4) zum Eintragen und/oder Austragen von Daten in RFID-Tags (22,222) und/oder aus RFID-Tags (22,222) der weiteren Automatisierungskomponenten (11, 111) vorgesehen sind.

19. Automatisierungskomponente nach einem der Ansprüche 14 bis 18, die zur Datenübertragung mit einer in ein Head Mounted Display (7) und/oder eine tragbare Computereinheit eines Augmented Reality Systems integrierten RFID-Schreib- und Leseeinheit (5) vorgesehen ist, wobei die von der Automatisierungskomponente (1) über die integrierte RFID-Schreib- und Leseeinheit (55) empfangenen Daten zur Darstellung in der augmentierten Realität eines Anwenders vorgesehen sind.

## Claims

1. Automation system comprising
• at least one automation component (1), having
i. an RFID tag (2) for storing data and
ii. a first RFID write/read device (4) for entering current operating data and/or process data of the automation component (1) into the RFID tag (2) and/or for reading out data from of the RFID tag (2),
• and at least one mobile RFID write/read device (5) for entering and/or reading out data into and/or out of the RFID tag (2), with it being possible to update the data stored in the RFID tag (2) by entering it using the first RFID write/read device (4) and/or the at least one mobile RFID write/read device (5).

2. Automation system according to claim 1, with the first RFID write/read device (4) being integrated into at least one automation component (1) and/or the RFID tag being integrated into the automation component and/or securely attached to the automation component (1) from the outside.

3. Automation system according to claim 1 or 2, with the RFID tag (2) being provided to store permanently-entered data and/or to store current operating data and/or process data of the automation component (1).

4. Automation system according to claim 3, with the at least one mobile RFID write/read device (5) being provided for reading the permanently-entered data and/or the data of the automation component (1) from the RFID tag (2).

5. Automation system according to one of claims 1 to 4, with which further automation components (11, 111) are provided, with the further automation components featuring an RFID tag (22, 222).

6. Automation system according to claim 5, with the first RFID write/read device (4) and/or the mobile RFID write/read device (5) being provided to enter and/or output data into and/or out of the further automation components (11, 111).

7. Automation system according to one of claims 1 to 6, with which a head-mounted display (7) and/or a portable computer device of an augmented reality system is provided with an integrated RFID write/read device (55), with the data received by an automation component (1) via the integrated RFID write/read device (55) being provided for display in the augmented reality of a user.

8. Method for transmitting data, to and/or from automation components, with which
• the data is stored on the at least one automation component (1) by means of an RFID tag (2),
• the current operating and/or process data of the at least one automation component (1) is entered into the RFID tag (2) by means of a first RFID write/read device (4) and/or data is read out from the RFID tag (2) by means of the first write/read device (4),
• and data is entered and/or output into and/or out of the RFID tag (2) by means of a mobile RFID write/read device (5), with the data stored in the RFID tag (2) being updated by entering it by means of the first RFID write/read device (4) and/or the at least one mobile RFID write/read unit (5).

9. Method according to claim 8, with which the RFID tag (2) and/or the first RFID write/read device (4) are integrated into the at least one automation component (1).

10. Method according to claim 8 or 9, with which the RFID tag (2) stores permanently-entered data and/or current operating and/or process data of the automation component (1).

11. Method according to claim 10, with which the at least one mobile RFID write/read device (5) reads permanently-entered data and/or data of the automation component (1) from the RFID tag (2) and/or enters data into the RFID tag (2).

12. Method according to one of claims 8 to 11, with which the first RFID write/read device (4) and/or the mobile RFID write/read device (5) inputs or outputs data into or out of further automation components (1), with the further automation components (1) featuring an RFID tag (2).

13. Method according to one of claims 8 to 12, with which an RFID write/read device (55) is integrated into a head-mounted display (7) and/or a portable computer device of an augmented reality system, with the data received by an automation component (1) via the integrated RFID write/read device (55) being displayed in the augmented reality of a user.

14. Automation component, having;
i. an RFID tag (2) for storing data and
ii. a first RFID write/read device (4) for inputting current operating data and/or process data of the automation component into and/or out of the RFID tag (2) and/or for reading out data from the RFID tag (2),
• with the automation component (1) being provided to transmit data with at least one mobile RFID write/read device (5) and with it being possible to read out or enter data from the RFID tag (2) of the automation component by means of the mobile write/read device (5) and with it being possible to update the data stored in the RFID tag (2) by means of the first RFID write/read unit (4) and/or the at least one mobile RFID write/read unit (5).

15. Automation component according to claim 14, with the first RFID write/read device (4) being integrated into the automation component (1) and/or the RFID tag being integrated into the automation component (1) and/or being securely attached to the automation component (1) from the outside.

16. Automation component according to claim 14 to 15, with the RFID tag (2) being provided to store permanently-entered data and/or to store current operating and/or processing data of the automation component (1).

17. Automation component according to claim 16, with the at least one mobile RFID write/read device (5) being provided to read the permanently-entered data and to the data of the automation component (1) from the RFID tag (2).

18. Automation component according to one of claims 14 to 17, provided for communication with further automation components (11, 111), with the first RFID write/read device (4) being provided to enter and/or output data in the RFID tag (22, 222) and/or from the RFID tag (22, 222) of the further automation component (11, 111).

19. Automation component according to one of claims 14 to 18, which is provided to transmit data with an RFID write/read device (55) integrated in a head-mounted display (7) and/or a portable computer device of an augmented reality system, with the data received by the automation component (1) via the integrated RFID write/read device (55) being provided for display in the augmented reality of a user.

## Revendications

1. Système d'automatisation comportant :
• au moins un composant d'automatisation ( 1 ) ayant
i. une étiquette RFID ( 2 ) pour la mémorisation de données, et
ii. une première unité d'écriture et de lecture RFID ( 4 ) pour l'enregistrement de données actuelles de fonctionnement et/ou de processus du composant d'automatisation ( 1 ) dans l'étiquette RFID ( 2 ) et/ou pour la lecture de données de l'étiquette RFID ( 2 ),
• et au moins une unité mobile d'écriture et de lecture RFID ( 5 ) pour l'enregistrement et/ou la lecture de données dans et/ou de l'étiquette RFID ( 2 ), les données mémorisées dans l'étiquette RFID ( 2 ) pouvant être actualisées par l'enregistrement au moyen de la première unité d'écriture et de lecture RFID ( 4 ) et/ou de la ou des unités mobiles d'écriture et de lecture RFID ( 5 ).

2. Système d'automatisation selon la revendication 1, dans lequel la première unité d'écriture et de lecture RFID ( 4 ) est intégrée dans au moins un composant d'automatisation ( 1 ) et/ou l'étiquette RFID est intégrée dans le composant d'automatisation ou est fixée, de l'extérieur, sur le composant d'automatisation ( 1 ).

3. Système d'automatisation selon la revendication 1 ou 2, dans lequel l'étiquette RFID ( 2 ) est prévue pour la mémorisation de données enregistrées définitivement et/ou pour la mémorisation de données actuelles de fonctionnement et de processus du composant d'automatisation ( 1 ).

4. Système d'automatisation selon la revendication 3, dans lequel la ou les unités mobiles d'écriture et de lecture RFID ( 5 ) sont prévues pour lire dans l'étiquette RFID ( 2 ) les données enregistrées définitivement et/ou les données du composant d'automatisation ( 1 ).

5. Système d'automatisation selon l'une des revendications 1 à 4, dans lequel d'autres composants d'automatisation ( 11, 111 ) sont prévus, les autres composants d'automatisation comportant une étiquette RFID ( 22, 222 ).

6. Système d'automatisation selon la revendication 5, dans lequel la première unité d'écriture et de lecture RFID ( 4 ) et/ou l'unité mobile d'écriture et de lecture RFID ( 5 ) sont prévues pour l'enregistrement de données dans les autres composants d'automatisation ( 11, 111 ) et/ou pour l'extraction de données des autres composants d'automatisation ( 11, 111 ).

7. Système d'automatisation selon l'une des revendications 1 à 6, dans lequel un casque de visualisation ( 7 ) et/ou un ordinateur portable d'un système de réalité augmentée avec une unité d'écriture et de lecture RFID intégrée ( 55 ) sont prévus, les données reçues d'un composant d'automatisation ( 1 ) via l'unité d'écriture et de lecture RFID intégrée ( 55 ) étant prévues pour une présentation dans la réalité augmentée d'un utilisateur.

8. Procédé pour la transmission de données, en direction et/ou en provenance de composants d'automatisation, dans lequel
• on mémorise les données sur le ou les composants d'automatisation ( 1 ) au moyen d'une étiquette RFID ( 2 ),
• on enregistre dans l'étiquette RFID ( 2 ) des données actuelles de fonctionnement et/ou de processus du ou des composants d'automatisation ( 1 ) au moyen d'une première unité d'écriture et de lecture RFID ( 4 ) et/ou on lit des données de l'étiquette RFID ( 2 ) au moyen de la première unité d'écriture et de lecture RFID ( 4 ),
• et on enregistre des données dans l'étiquette RFID ( 2 ) et/ou on extrait des données de l'étiquette RFID ( 2 ) au moyen d'une unité mobile d'écriture et de lecture RFID ( 5 ), les données mémorisées dans l'étiquette RFID ( 2 ) étant actualisées par l'enregistrement au moyen de la première unité d'écriture et de lecture RFID ( 4 ) et/ou de la ou des unités mobiles d'écriture et de lecture RFID ( 5 ).

9. Procédé selon la revendication 8, dans lequel l'étiquette RFID ( 2 ) et/ou la première unité d'écriture et de lecture RFID ( 4 ) sont intégrées dans le ou les composants d'automatisation ( 1 ).

10. Procédé selon la revendication 8 ou 9, dans lequel l'étiquette RFID ( 2 ) mémorise des données enregistrées définitivement et/ou des données actuelles de fonctionnement et/ou de processus du composant d'automatisation ( 1 ).

11. Procédé selon la revendication 10, dans lequel la ou les unités mobiles d'écriture et de lecture RFID ( 5 ) lisent dans l'étiquette RFID ( 2 ) des données enregistrées définitivement et/ou des données du composant d'automatisation ( 1 ) et/ou enregistrent des données dans l'étiquette RFID ( 2 ).

12. Procédé selon l'une des revendications 8 à 11, dans lequel la première unité d'écriture et de lecture RFID ( 4 ) et/ou l'unité mobile d'écriture et de lecture RFID ( 5 ) enregistrent des données dans les autres composants d'automatisation et/ou extraient des données des autres composants d'automatisation ( 1 ), les autres composants d'automatisation ( 1 ) comportant une étiquette RFID ( 2 ).

13. Procédé selon l'une des revendications 8 à 12, dans lequel une unité d'écriture et de lecture RFID ( 55 ) est intégrée dans un casque de visualisation ( 7 ) et/ou dans un ordinateur portable d'un système de réalité augmentée, les données reçues d'un premier composant d'automatisation ( 1 ) via l'unité d'écriture et de lecture RFID intégrée ( 55 ) étant présentées dans la réalité augmentée d'un utilisateur.

14. Composant d'automatisation avec
i. une étiquette RFID ( 2 ) pour la mémorisation de données et
ii. une première unité d'écriture et de lecture RFID ( 4 ) pour l'enregistrement de données actuelles de fonctionnement et/ou de processus du composant d'automatisation ( 1 ) dans l'étiquette RFID ( 2 ) et/ou pour la lecture de données de l'étiquette RFID ( 2 ),
• le composant d'automatisation ( 1 ) étant prévu pour la transmission de données avec au moins une unité mobile d'écriture et de lecture RFID ( 5 ), des données pouvant être extraites et/ou enregistrées dans l'étiquette RFID ( 2 ) du composant d'automatisation au moyen de l'unité mobile d'écriture et de lecture RFID ( 5 ) et les données mémorisées dans l'étiquette RFID ( 2 ) pouvant être actualisées par l'enregistrement au moyen de la première unité d'écriture et de lecture RFID ( 4 ) et/ou de la ou des unités mobiles d'écriture et de lecture RFID ( 5 ).

15. Composant d'automatisation selon la revendication 14, la première unité d'écriture et de lecture RFID ( 4 ) étant intégrée dans au moins un composant d'automatisation ( 1 ) et/ou l'étiquette RFID étant intégrée dans le composant d'automatisation ( 1 ) ou étant fixée, de l'extérieur, sur le composant d'automatisation ( 1 ).

16. composant d'automatisation selon la revendication 14 ou 15, l'étiquette RFID ( 2 ) étant prévue pour la mémorisation de données enregistrées définitivement et/ou pour la mémorisation de données actuelles de fonctionnement et de processus du composant d'automatisation ( 1 ).

17. Composant d'automatisation selon la revendication 16, la ou les unités mobiles d'écriture et de lecture RFID ( 5 ) étant prévues pour lire dans l'étiquette RFID ( 2 ) les données enregistrées définitivement et/ou les données du composant d'automatisation ( 1 ).

18. Composant d'automatisation selon l'une des revendications 14 à 17, qui est prévu pour la communication avec d'autres composants d'automatisation ( 11, 111 ), la première unité d'écriture et de lecture RFID ( 4 ) étant prévue pour l'enregistrement de données dans des étiquettes RFID ( 22, 222 ) des autres composants d'automatisation ( 11, 111 ) et/ou pour l'extraction de données d'étiquettes RFID ( 22, 222 ) des autres composants d'automatisation ( 11, 111 ).

19. Composant d'automatisation selon l'une des revendications 14 à 18, qui est prévu pour la transmission de données avec une unité d'écriture et de lecture ( 5 ) intégrée dans un casque de visualisation ( 7 ) et/ou un dans ordinateur portable d'un système de réalité augmentée, les données reçues d'un composant d'automatisation ( 1 ) via l'unité d'écriture et de lecture RFID intégrée ( 55 ) étant prévues pour une présentation dans la réalité augmentée d'un utilisateur.
